# EUROPEAN PATENT SPECIFICATION

(11) **EP 3 573 785 B1**
(45) Date of publication and mention of the grant of the patent: **17.07.2024**
(21) Application number: 18704061.3
(22) Date of filing: 26.01.2018
(51) Int. Cl.: B24D 15/00, B24B 7/10, B24B 19/22, B24D 15/02, G02B 6/38

(54) **FIBRE OPTIC POLISHING TOOL**
FASEROPTISCHES POLIERWERKZEUG
OUTIL DE POLISSAGE DE FIBRE OPTIQUE

(30) Priority: 27.01.2017 GB 201701342
(43) Date of publication of application: 04.12.2019
(73) Proprietor: Alker Fibre Optic Specialists Limited, Dormansland Lingfield Surrey RH7 6PB (GB)
(72) Inventor: KERSHAW, Richard Alan, Dormansland Surrey RH7 6PB (GB)
(74) Representative: Potter Clarkson
(86) International application number: PCT/GB2018/050217
(87) International publication number: WO 2018/138506

(56) References cited:
- EP-A1- 2 116 880
- EP-A1- 2 400 325
- US-A1- 2008 034 519

## Description

### FIELD OF THE INVENTION

The invention relates to polishing tools for polishing fibre optic connectors, in particular to tools for re-polishing the end faces of both male and female ferrules, contacts and pins within fibre optic connectors.

### BACKGROUND OF THE INVENTION

The term "connector" as used herein refers to all forms of connection means for fibre optics including ferrules and adaptors. An optical fibre connector terminates the end of an optical fibre and enables connection and disconnection to adjacent optical fibres.

There are vast numbers of fibre optic connectors in service around the world, many of which are in high value assemblies. In addition, these assemblies may be attached to critical and/or high value equipment such as in aircraft, submarines, test equipment or other critical applications. Not only are such assemblies high value, but they may also have a very long delivery timescale, making replacement of damaged connectors difficult and potentially very significant, both operationally and cost-wise. Fibre optics are being used in more applications within all sorts of products around the world and usage is expected to continue to increase.

Fibre optic connectors are generally used with two parts: a male and a female side. Both are subject to damage and wear of the ferrule/contact/pin end faces within the connector. These end faces can be very small and, if damaged, they restrict or stop the signal from travelling through the fibre optic assembly.

Damaged or worn end faces may necessitate replacement of a connector and it would, therefore, be advantageous for ferrules, contacts and/or pins in fibre optic connector assemblies to be re-polished to repair them and enable them to be used further, thus reducing the need for replacement. However, reliable polishing processes are critical to the effective functioning of the connectors.

A variety of cleaning devices are known for fibre optic connectors. These are used to wipe dirt from ferrule ends by use of soft cleaning materials. For example, EP-A-2400325 discloses an optical connector cleaning tool that wipes away dirt and cleans a joining end face of an optical connector by a cleaning body that is fed and moved by a pressing action of a tool. US2008/034519 A1 and EP-A-2116880 also disclose optical connector cleaning tools.

From US 2008/034519 A1 there is known a cleaning tool for cleaning fibre optic connectors, wherein the cleaning tool comprises: a handle portion and a cleaning probe, wherein the handle portion comprises: mounting means to attach the cleaning probe to the handle portion; a spool for holding a supply of polishing paper; a supply of cleaning paper; a store for holding used cleaning paper; and wherein the cleaning probe comprises: a mounting portion to attach a proximal end of the cleaning probe to the mounting means; a probe head mounted at a distal end of the cleaning probe, wherein the probe head has a pre-determined profile; guide means to guide the cleaning paper from the supply spool, over the probe head and back into the used paper store, the surface of the cleaning paper passing over the probe head and resilient biasing means to control pressure of the probe head onto a fibre optic connector end face in use, and wherein the tool further comprises means to move the cleaning paper over the probe head.

Other cleaning devices may include a cleaning head that oscillates to wipe dirt off a ferrule end. None of the known cleaning devices would be suitable for re-polishing ferrule ends as they would be unable to provide sufficient pressure or accurate enough pressure to effect polishing and would be unable to control any polishing action. Further, such devices would not be accurate enough for locating the polishing paper to the end face of the fibre core within the ferrule. In summary, cleaning devices can only clean connector ends.

The requirements for polishing are completely different and hence users have tried a number of different alternative polishing machines. In particular, there are a number of different "field-use" polishing products available but these are complicated and require significant operator training to be used effectively. In particular, known devices require the connector to be inserted into a polishing head or disc in order for the re-polishing to be effected. This may require equipment and/or assemblies to be dismantled in order for the connector to be used with the polishing machine. It would be advantageous to be able to re-polish fibre optic connector end faces *in situ* without having to move the connector to a polishing machine.

The listing or discussion of an apparently prior published document in this specification should not necessarily be taken as an acknowledgement that the document is part of the state of the art or is common general knowledge.

### SUMMARY OF THE INVENTION

The invention provides a polishing tool for polishing and/or re-polishing fibre optic connector end faces in accordance with claim 1 of the appended claims.

In particular, the invention provides a polishing tool for polishing fibre optic connectors comprising a handle portion and a polishing probe. The handle portion comprises mounting means to attach the polishing probe to the handle portion, a spool for holding a supply of polishing paper and a store for holding used polishing paper. The polishing probe comprises a mounting portion to attach a proximal end of the polishing probe to the mounting means, a probe head mounted at a distal end of the polishing probe, guide means to guide the polishing paper from the supply spool, over the probe head and back into the used paper store and resilient biasing means to control pressure of the probe head in use. The combination of the probe head and the polishing paper provides a deformable surface for providing pressure against the connector end face in use. In one option, the probe head is formed from a deformable material, such as rubber or a plastics material, and the polishing paper passes over the head in use. In an alternative arrangement, the probe head is made of a relatively hard material, such as stainless steel, and the polishing paper is made with a relatively soft, or deformable, backing material such as a plastics material.

The probe head is shaped to have a predetermined end profile to enable the probe head to contact the end face of the connector that is to be polished over a major portion of the end face. Suitable profiles include domed, convex, flat or angled and the profile is selected to correspond to the re-polishing profile required for the connector end face.

The resilient biasing means is selected to provide a predetermined level of pressure onto a fibre optic connector end face when the tool is in use. The tool further comprises means to move the polishing paper over the probe head. The means to move the paper further includes means to control the speed at which the paper is moved over the probe head.

The tool can be held in the hand and can be used *in situ* to polish the end faces of fibre optic connector ferrules, contacts and pins in connectors and adapters.

The polishing tool may further comprise a supply of polishing paper. Such a tool would advantageously be a "single use" tool such that when the polishing paper has been used, the tool will be disposed of and replaced with another tool.

Alternatively, the supply of polishing paper may be provided separately and be inserted into the tool for use, with the tool being reusable.

Polishing paper comprises a paper, cloth or other flexible material backing with an abrasive material on one face. Different types of polishing paper are available with different grades of abrasiveness. For the present invention, the polishing paper backing material must be able to move smoothly and easily over the probe head and must be strong enough to withstand the polishing forces applied by the tool. As used herein, the term "polishing paper" includes any type of backing material supporting a suitable abrasive material. Advantageously the backing material is selected to have a pre-determined deformability. Suitable materials include plastics materials.

The polishing paper may be of a single grade, depending on the use. Examples of grades generally used for polishing fibre optic connectors range from "fine", through "medium" to "coarse". In a preferred embodiment, a single grade of paper is provided in a tool and different tools are provided with different grades of paper. Alternatively, a number of different grades may be provided on a single spool of polishing paper. Advantageously the polishing paper may be provided as three different grades, a coarse grade, a medium grade and a fine grade, with the amount of each grade being selected to provide desired polishing at each grade. Alternatively, options for more grades can be provided to enable different polishing regimes to be achieved.

Ferrules, contacts and pins in fibre optic connectors can be made from a variety of different materials, with very varying levels of hardness. For example, many are made from zirconia, which is a very hard material, others are made from different metals and even plastics and resin materials may be used, which are relatively soft.

In an advantageous arrangement that can be suitable for use with different types of connector materials, a number of different grades of polishing paper may be provided in different tools. In one example, five different grades may be provided ranging from a relative coarse grade through to a relatively fine grade. For softer connector materials such as plastics, polishing may be provided by a single grade. For medium type materials, such as metals, three different grades may be used, while for very hard materials such as zirconia, it may be necessary to use all five grades to provide the desired level of polishing.

Preferably the store for holding used polishing paper comprises a second spool. In use, the used polishing paper moves dirt and debris away from the probe head of the polishing probe. Advantageously, dirt and debris may be retained in a store within the handle of the polishing tool.

The means to move the polishing paper comprises means to move the paper from the supply spool, over the probe head and back to the used paper store. The movement of the paper over the probe head provides the polishing action of the head on the end face of the fibre optic. Advantageously the moving means comprises a wind-up or "clock-work" mechanism. Such a mechanism includes a wind-up handle to tighten a spring. When the spring is released, the paper is moved from the supply spool, through the tool, over the probe head and back to the used paper store. In an advantageous arrangement, the used paper store comprises a second spool and the wind-up spring is arranged adjacent to the supply spool and the used paper spool. Preferably the handle is provided with a release button to release the wound-up spring and operate the tool. This type of arrangement is particularly useful for areas where combustion is not allowed but alternative arrangements using battery power or mains electricity are possible where there are no restrictions or limitations on power options.

The speed of movement of the polishing paper over the head is controlled to provide sufficient speed to effect the required level of polishing. The speed may be controlled by the winding of the spring or by the power supplied to rotate the supply spool. The movement may be controlled in set increments or may be continuous.

The polishing probe is mounted on the handle portion and has a probe head at its distal end. In use, the probe head is positioned over a fibre optic connector end face so that the end face can be polished. The polishing paper is arranged to pass from the supply spool, over the probe head and back to the used paper store. The tool includes guide means to ensure that the paper passes over the probe head without being displaced. The guide means may be channels or pipes to maintain the paper on a smooth path. The probe head is shaped to allow the paper to pass smoothly over it while carrying out the polishing action on a connector end face. Preferably the probe head is radiused to provide a polishing profile suitable for re-polishing connector end faces. The profile of the probe head is pre-selected to correspond to the requirements for the end face to be polished or re-polished. Suitable profiles include domed, convex, flat or angled, or any suitable shape.

Advantageously the probe head is formed of a material that is softer than the main body of the probe. Alternatively, the probe head may be of a relatively hard material and the polishing paper may comprise a backing material that has a required amount of deformability. A material with a certain amount of resilience or softness can be used to allow for some deformation of the head over the end face that is being polished. Examples of suitable materials where the probe head is relatively deformable include rubber or plastics materials. Examples of suitable polishing paper backing materials include plastics materials and these may be used in combination with probe head materials such as stainless steel. A combination of a deformable probe head material and a polishing paper with a deformable material backing can also be used. The combination of the probe head material and the backing paper material is selected to provide the desired amount of deformability. The diameter of the head is advantageously selected for use in different types of connector and may, for example, be 1.2mm, or 2.45mm, or any suitable diameter. Larger connectors may require a polishing head with a diameter of 10mm or larger. Smaller, very delicate devices may require smaller diameter heads.

The polishing head is suitable for directly polishing female type ferrules/contacts/pins. For polishing of male type ferrules/contacts/pins, the head is preferably provided with an adapter to guide the ferrule or other connecting means to the polishing head. Such an adapter is preferably a cylinder that slides over the polishing head and is held in place on the probe.

The polishing probe is provided with resilient biasing means to control the pressure of the probe head onto a connector end face, in use. The resilient means provides a constant pressure of the probe head onto the end face while polishing, thus avoiding a user affecting the polishing pressure. Preferably the resilient biasing means comprises a spring but it may be any suitable means such as a hydraulic damper. The probe head is mounted on a distal portion of the polishing probe and a proximal portion of the polishing probe is mounted on the handle portion. Advantageously the distal portion can move in and out relative to the proximal portion, with the movement being controlled by the biasing means. Advantageously the proximal portion is provided with slots and the distal portion is provided with inserts that can slide within the slots.

The pressure of the probe head onto the connector end face in use is controlled to be at a predetermined level depending on the material of the connector and the amount of polishing that is required. The pressure may be controlled by a suitable adjustment means in order to tailor each re-polishing requirement and different grades of polishing papers. Examples of adjustment means include an adjustable spring position, adjustable spring length, or selectable hydraulic damper pressures but any suitable means may be used.

Preferably the polishing probe is also provided with means to angle the distal portion of the probe and the probe head relative to the handle portion. This enables the polishing probe to be inserted into areas that would otherwise with difficult to reach. The angle means may comprise a coil and locking means which can position the probe head at different angles with respect to the handle portion. Alternatively, the probe head itself may be provided with angling means or may be arranged with an angled end, for example at 45° or 90° with respect to the polishing probe.

In an alternative arrangement, the polishing probe may include means to rotate the probe head from side to side. The rotation may be repeated 180° clockwise, 180° counter-clockwise or may be any suitable angle in each direction. The rotation of the probe head provides an additional rotational polishing action in addition to the translational action of the polishing paper moving over the probe head. The rotational movement of the probe head may be driven by the same means used to move the polishing paper or may be driven by a separate arrangement.

The invention further provides a method of use of a polishing tool for re-polishing the end face of a fibre optic connector in accordance with the invention comprising the steps of:
selecting a tool with a suitable grade of polishing paper and combination of probe head and polishing paper deformability;
selecting the required pressure of the probe head onto the end face of the connector;
positioning the probe head over the end face of the connector;
operating the moving means to move the polishing paper over the probe head to polish the end face;
moving the used paper to the used paper store and collecting dirt and debris from the used paper.

To have a better understanding of the invention reference is made to the following non-limiting description of the invention and embodiments thereof in conjunction with the accompanying drawings. The figures are not necessarily to scale and certain features and certain views of the figures may be shown exaggerated in scale or in schematic form in the interests of clarity and conciseness.

### BRIEF DESCRIPTION OF THE DRAWINGS

Figure 1 shows a side view of a polishing tool in accordance with the invention;
Figure 2 shows a cross-sectional view of a handle portion of the polishing tool;
Figure 3a shows a cross-sectional view of a polishing probe of the polishing tool;
Figure 3b shows a cross-sectional view of a polishing probe of the polishing tool in an alternative arrangement; and
Figure 4 shows an end sectional view of the handle portion.

### DETAILED DESCRIPTION OF THE PREFERRED EMBODIMENTS

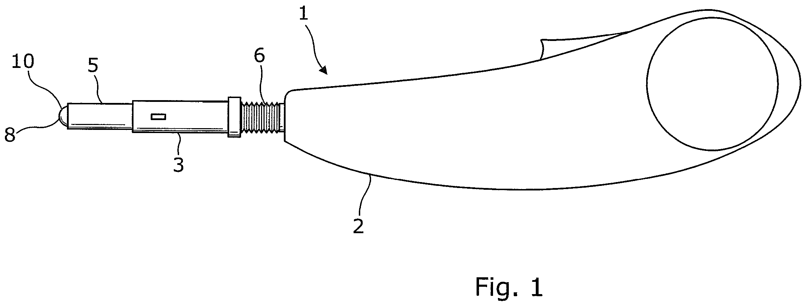

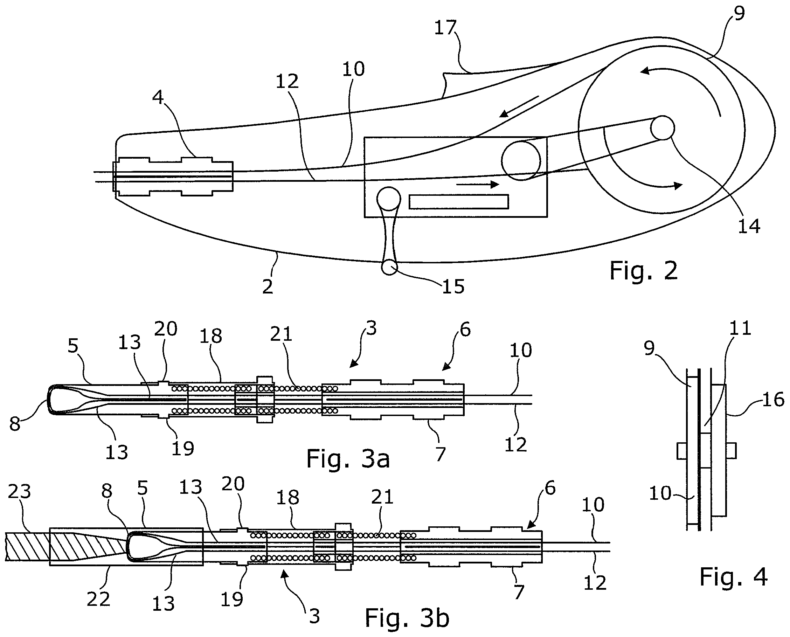

As shown in Figures 1, 2, 3a and 3b, a polishing tool 1 in accordance with the invention comprises a handle portion 2 and a polishing probe 3. Figure 1 shows a side view of the polishing tool 1 when assembled ready for use. Figures 2 and 3a,b show the handle portion 2 and the polishing probe 3 in cross-section, respectively.

As shown in Figures 1 to 3, the handle portion 2 comprises mounting means 4 to attach the polishing probe 3 to the handle portion 2. The polishing probe 3 has a distal end 5 and a proximal end 6 and comprises a complementary mounting portion 7 to attach the proximal end 6 of the polishing probe 3 to the mounting means. A probe head 8 is mounted at the distal end 5 of the polishing probe 3. In use, the probe head 8 is inserted into a connector (not shown) to polish end faces of ferrules, contacts or pins, as required.

A spool 9 for holding a supply of polishing paper 10 is mounted within the handle portion 2. The polishing tool 1 may be a "single use" tool, supplied with a selected grade of polishing paper or the supply of polishing paper of a desired grade may be provided separately and be inserted into the tool 1 for use, with the tool being reusable.

The grade of polishing paper may be selected depending on the desired use. Examples of grades generally used for polishing fibre optic connectors are referred to as "fine", "medium" and "coarse". In one option, a single grade of paper is provided in one tool 1 and different tools are provided with different grades of paper. Another option is for different grades of paper to be inserted into the tool 1, depending on the requirements for use. A further option is for a number of different grades to be provided on a single spool of polishing paper. Advantageously the polishing paper may be provided as three different grades, a coarse grade, a medium grade and a fine grade, with the amount of each grade being selected to provide desired polishing at each grade.

In an advantageous arrangement that can be suitable for use with different types of connector materials, a number of different grades of polishing paper may be provided in different tools. In one example, five different grades may be provided ranging from a relative coarse grade through to a relatively fine grade. For softer connector materials such as plastics, polishing may be provided by a single grade. For medium type materials, such as metals, three different grades may be used, while for very hard materials such as zirconia, it may be necessary to use all five grades to provide the desired level of polishing.

In use, the polishing paper 10 is moved from the spool 9, over the probe head 8 and back to a store 11 for holding the used polishing paper 12. The store 11 for holding the used polishing paper 12 may be a second spool. In use, the used polishing paper 12 moves dirt and debris away from the probe head 8 of the polishing probe 3 and carries it into the handle portion 2 where is can be retained. If the tool 1 is to be re-used then any dirt and debris can be removed before a new supply of polishing paper is inserted.

The handle portion 2 and the polishing probe 3 include guide means 13 to guide the polishing paper 10 from the supply spool 9, over the probe head 8 and back into the used paper store 11. The guide means 13 may be pipes or channels to keep the polishing paper 10 in line as it moves through the tool 1 and over the probe head 8 to carry out the polishing action.

The probe head 8 is shaped to allow the paper 10 to pass smoothly over it while carrying out the polishing action on a connector end face. Preferably the probe head 8 is radiused to provide a polishing profile suitable for re-polishing connector end faces. The probe head 8 may be formed of any suitable material but in certain embodiments it is made of a relatively soft material such as rubber or plastics material that allows for some deformation of the head over the end face that is being polished. Alternatively the probe head 8 may be made of a relatively hard material such as stainless steel and the polishing paper has a softer backing material. The combination of the material of the probe head 8 and the polishing paper material is selected to provide a suitable deformation over the end face that is being polished. The diameter of the head 8 is advantageously selected for use in different types of connector and may, for example, be 1.2mm, or 2.45mm, or any suitable diameter. Larger connectors may require a polishing head with a diameter of 10mm or larger. Smaller, very delicate devices may require smaller diameter heads.

The probe head 8 as shown in Figure 3a is suitable for directly polishing female type ferrules/contacts/pins. Figure 3b shows a probe head 8 with an adaptor 22 to enable more effective polishing of male type ferrules/contacts/pins 23. The adapter 22 comprises a cylindrically shaped guide that slides onto the polishing probe 3. In use, the adapter 22 fits over a male type ferrule 23 (for example) to guide the ferrule 22 to the probe head 8 for polishing to be effected. The adapter 22 may be a simple push fit arrangement or may have fastening means (not shown) to hold it on the probe distal end 5.

The polishing paper 10 is moved through the polishing tool 1 by moving means 14 which can be driven by a wind-up or clockwork system, battery, mains power or other suitable power means. Figure 2 shows a suitable wind-up arrangement in which a handle 15 is rotated to wind up a spring 16 to increase its tension. When the spring 16 is fully wound up, the tool 1 is ready to use. The probe head 8 is positioned in a connector, the spring 16 is released by a release button 17 and the tension in the spring 16 drives the spools 9,11 to rotate and move the polishing paper 10 from the supply spool 9, through the tool 1, over the probe head 8 and back to the used paper store 11. The movement of the polishing paper 10 over the probe head 8 may be in set increments or may be continuous.

The movement of the paper 10 over the probe head 8 provides the polishing action of the head on the end face of the fibre optic ferrule/contact/pin. The operation of the polishing tool 1 is the same for the different types of ferrule, contacts or pins, with the movement of the polishing paper 10 over the probe head 8 providing the polishing action for both male and female elements.

Figure 4 shows an arrangement in which the wind-up spring 16 is arranged adjacent to the supply spool 9 and the used paper spool 11.

A wind-up power supply is particularly useful for areas where combustion is not allowed but alternative arrangements using other power means such as a battery or mains electricity can also be used where there are no restrictions or limitations on power options.

In use, the polishing tool 1 is held in a user's hand and can be used *in situ* to polish the end faces of fibre optic ferrules, contacts or pins within connectors. The probe head 8 is pressed against the end face to be polished and applies pressure as the polishing paper 10 moves over the probe head 8 to provide the polishing action. The polishing probe 3 is provided with a resilient biasing means 18 to control the pressure of the probe head 8 onto the end face. The resilient means 18 provides a constant pressure of the probe head 8 onto the end face while polishing, thus avoiding a user affecting the polishing pressure. As shown, the resilient biasing means 18 may be a spring but it may be any suitable means such as a hydraulic damper. The probe head 8 is mounted on the distal portion 5 of the polishing probe 3 and the proximal portion 6 of the polishing probe 3 is mounted on the handle portion 2. The distal portion 5 can move in and out relative to the proximal portion 6, with the movement being controlled by the biasing spring 18. The distal portion 5 has a plurality of inserts 19 that slide within slots 20 on the proximal portion 6 to allow controlled movement of the distal portion 5 relative to the proximal portion 6 of the probe 3 and the handle 2. The pressure of the probe head onto the end face is controlled by selection of the pressure of the resilient biasing means. This may be pre-selected depending on the connectors to be polished or may have an adjustable pressure means such as an adjustable spring length or hydraulic damper pressure.

The polishing probe 3 also includes means 21 to angle the distal portion 5 of the probe 3 and the probe head 8 relative to the handle portion 2. This enables the polishing probe 3 to be inserted into areas that would otherwise with difficult to reach. The angle means 21 comprises a coil and two holding bars which can position the probe head 8 at different angles with respect to the handle portion 2.

In an alternative arrangement, the probe head 8 may itself be angled, either with a fixed angle or with means to adjust the angle of the probe head 8 relative to the polishing probe 3. Suitable angles may be 45° or 90° and can be advantageous for use in areas that are otherwise difficult to access.

In an alternative arrangement, the polishing probe 3 includes means to rotate the probe head 8 from side to side. The rotation may be repeated 180° clockwise, 180° counter-clockwise or may be any suitable angle in each direction. The rotation of the probe head 8 provides an additional polishing action of up to 360° rotation in addition to the action of the polishing paper moving over the probe head 8. The rotational movement of the probe head 8 is actuated by the tension spring 16 but may alternatively be driven by a separate power supply.

While the embodiments described herein are intended as exemplary, it will be appreciated by those skilled in the art that the present invention is not limited to the embodiments illustrated. Those skilled in the art will envision many other possible variations and modifications by means of the skilled person's common knowledge without departing from the scope of the invention, however, such variations and modifications should fall into the scope of this invention, as defined by the claims.

## Claims

1. A polishing tool (1) for polishing fibre optic connectors wherein the polishing tool (1) comprises:
a handle portion (2); and
a polishing probe (3),
wherein the handle portion (2) comprises:
mounting means (4) to attach the polishing probe (3) to the handle portion (2);
a spool (9) for holding a supply of polishing paper (10);
a supply of polishing paper (10) comprising a backing material having a smooth surface on one face and an abrasive material on the other face;
a store (11) for holding used polishing paper (12);
and wherein the polishing probe (3) comprises:
a mounting portion (7) to attach a proximal end (6) of the polishing probe (3) to the mounting means (4);
a probe head (8) mounted at a distal end (5) of the polishing probe (3), wherein the probe head (8) has a pre-determined profile;
guide means (13) to guide the polishing paper (10) from the supply spool (9), over the probe head (8) and back into the used paper store (11), the smooth surface of the polishing paper backing material passing over the probe head (8); and
resilient biasing means (18) to control pressure of the probe head (8) onto a fibre optic connector end face in use, wherein the biasing means (18) is selected to provide a predetermined level of pressure onto the fibre optic connector end face;
wherein one or both of the probe head (8) and the polishing paper backing material is formed from a deformable material and wherein the combination of the probe head (8) and the polishing paper (10) provides a deformable surface for providing the controlled pressure against the connector end face in use;
and wherein the tool (1) further comprises means (14) to move the polishing paper (10) over the probe head (8), the means (14) to move the paper further controlling the speed at which the polishing paper (10) is moved over the probe head (8).

2. A polishing tool (1) in accordance with claim 1, wherein the polishing paper (10) comprises a selected grade of abrasiveness.

3. A polishing tool (1) in accordance with claim 2, wherein the polishing paper (10) comprises a plurality of different grades of abrasiveness on a single spool of polishing paper (10).

4. A polishing tool (1) in accordance with any one of the preceding claims, wherein the means (14) to move the polishing paper over the probe head (8) comprises means to move the paper (10) from the supply spool (9), over the probe head (8) and back to the used paper store (11).

5. A polishing tool (1) in accordance with claim 3 wherein the moving means (14) comprises a wind-up or "clock-work" mechanism comprising a spring (16) and a wind-up handle (15) or wherein the moving means comprises a battery or mains power.

6. A polishing tool (1) in accordance with any one of the preceding claims, wherein the probe head (8) is shaped to allow the paper (10) to pass smoothly over it while carrying out the polishing action on a connector end face.

7. A polishing tool (1) in accordance with any one of the preceding claims, wherein the probe head (8) is formed of a material that is softer than the main body of the probe (3).

8. A polishing tool (1) in accordance with any one of claims 1 to 6 wherein the probe head (8) is formed of a relatively hard material and a backing material of the polishing paper (10) is made of a relatively soft material.

9. A polishing tool (1) in accordance with any one of the preceding claims, wherein the diameter of the probe head (8) is selected for use in different types of connector.

10. A polishing tool (1) in accordance with any one of the preceding claims, wherein the resilient biasing means (18) comprises a spring.

11. A polishing tool (1) in accordance with any one of the preceding claims wherein the pressure of the resilient biasing means (18) is adjustable.

12. A polishing tool (1) in accordance with any one of the preceding claims, wherein the polishing probe (3) is provided with means (21) to angle the distal portion (5) of the probe (3) and the probe head (8) relative to the handle portion (2).

13. A polishing tool (1) in accordance with any one of the preceding claims, wherein the polishing probe (3) further includes means to rotate the probe head (8) from side to side.

14. A polishing tool (1) in accordance with any one of the preceding claims, wherein the polishing probe (3) further comprises an adapter (22) to facilitate polishing of male type ferrules/contacts/pins.

15. A polishing tool (1) in accordance with claim 13, wherein the adapter (22) is a cylinder attached to the distal end of the polishing probe (3).

16. A method of use of a polishing tool (1) in accordance with any one of the preceding claims, comprising the steps of:
selecting a tool (1) with a suitable grade of polishing paper (10) and combination of probe head (8) and polishing paper (10) deformability;
selecting the required pressure of the probe head (8) onto the end face of the connector;
positioning the probe head (8) over the end face of the connector;
operating the moving means (14) to move the polishing paper (10) over the probe head (8) to polish the end face;
moving the used paper (12) to the used paper store (11) and collecting dirt and debris from the used paper.

## Patentansprüche

1. Polierwerkzeug (1) zum Polieren von faseroptischen Steckverbindern, wobei das Polierwerkzeug (1) folgendes umfasst:
einen Griffabschnitt (2); und
eine Poliersonde (3),
wobei der Griffabschnitt (2) folgendes umfasst:
Befestigungsmittel (4), um die Poliersonde (3) an dem Griffabschnitt (2) zu befestigen;
eine Spule (9) zur Aufbewahrung eines Vorrats an Polierpapier (10);
einen Vorrat an Polierpapier (10), der ein Trägermaterial mit einer glatten Oberfläche auf der einen Fläche und ein schleifendes Material auf der anderen Fläche umfasst;
einen Speicher (11) zur Aufbewahrung von gebrauchtem Polierpapier (12);
und wobei die Poliersonde (3) folgendes umfasst:
einen Befestigungsabschnitt (7) zum Befestigen eines proximalen Endes (6) der Poliersonde (3) an dem Befestigungsmittel (4);
einen Sondenkopf (8), der an einem distalen Ende (5) der Poliersonde (3) angebracht ist, wobei der Sondenkopf (8) ein vorbestimmtes Profil aufweist;
Führungsmittel (13), um das Polierpapier (10) von der Vorratsspule (9) über den Sondenkopf (8) und zurück in den Gebrauchspapierspeicher (11) zu führen, wobei die glatte Oberfläche des Trägermaterials des Polierpapiers über den Sondenkopf (8) läuft; und
elastisches Vorspannmittel (18), um den Druck des Sondenkopfes (8) auf eine Endfläche des faseroptischen Steckverbinders im Gebrauch zu steuern, wobei das Vorspannmittel (18) so ausgewählt ist, dass es ein vorbestimmtes Druckniveau auf die Endfläche des faseroptischen Steckverbinders bereitstellt;
wobei entweder der Sondenkopf (8) oder das Trägermaterial des Polierpapiers oder beide aus einem verformbaren Material gebildet sind und wobei die Kombination aus dem Sondenkopf (8) und dem Polierpapier (10) eine verformbare Oberfläche bereitstellt, um den kontrollierten Druck gegen die Endfläche des Steckverbinders im Gebrauch bereitzustellen;
und wobei das Werkzeug (1) ferner Mittel (14) umfasst, um das Polierpapier (10) über den Sondenkopf (8) zu bewegen, wobei die Mittel (14) zum Bewegen des Papiers ferner die Geschwindigkeit steuern, mit der das Polierpapier (10) über den Sondenkopf (8) bewegt wird.

2. Polierwerkzeug (1) nach Anspruch 1, wobei das Polierpapier (10) einen ausgewählten Abrasivitätsgrad umfasst.

3. Polierwerkzeug (1) nach Anspruch 2, wobei das Polierpapier (10) auf einer einzigen Spule des Polierpapiers (10) eine Vielzahl von unterschiedlichen Abrasivitätsgraden umfasst.

4. Polierwerkzeug (1) nach einem der vorstehenden Ansprüche, wobei das Mittel (14) zum Bewegen des Polierpapiers über den Sondenkopf (8) ein Mittel zum Bewegen des Papiers (10) von der Vorratsspule (9) über den Sondenkopf (8) und zurück in den Gebrauchspapierspeicher (11) umfasst.

5. Polierwerkzeug (1) nach Anspruch 3, wobei das Bewegungsmittel (14) einen Wind-up- oder "Uhrwerk"-Mechanismus umfasst, der eine Feder (16) und einen Wind-up-Griff (15) umfasst, oder wobei das Bewegungsmittel eine Batterie oder Netzstrom umfasst.

6. Polierwerkzeug (1) nach einem der vorstehenden Ansprüche, wobei der Sondenkopf (8) so geformt ist, dass das Papier (10) während des Poliervorgangs an einer Steckverbinder-Endfläche reibungslos über ihn hinweglaufen kann.

7. Polierwerkzeug (1) nach einem der vorstehenden Ansprüche, wobei der Sondenkopf (8) aus einem Material gebildet ist, das weicher ist als der Hauptkörper der Sonde (3).

8. Polierwerkzeug (1) nach einem der Ansprüche 1 bis 6, wobei der Sondenkopf (8) aus einem relativ harten Material gebildet ist und ein Trägermaterial des Polierpapiers (10) aus einem relativ weichen Material hergestellt ist.

9. Polierwerkzeug (1) nach einem der vorstehenden Ansprüche, wobei der Durchmesser des Sondenkopfes (8) für die Verwendung in verschiedenen Arten von Steckverbindern ausgewählt ist.

10. Polierwerkzeug (1) nach einem der vorstehenden Ansprüche, wobei das elastische Vorspannmittel (18) eine Feder umfasst.

11. Polierwerkzeug (1) nach einem der vorstehenden Ansprüche, wobei das elastische Vorspannmittel (18) einstellbar ist.

12. Polierwerkzeug (1) nach einem der vorstehenden Ansprüche, wobei die Poliersonde (3) mit Mitteln (21) bereitgestellt wird, um den distalen Abschnitt (5) der Sonde (3) und den Sondenkopf (8) relativ zum Griffabschnitt (2) zu neigen.

13. Polierwerkzeug (1) nach einem der vorstehenden Ansprüche, wobei die Poliersonde (3) ferner Mittel zum Drehen des Sondenkopfes (8) von einer Seite zur anderen einschließt.

14. Polierwerkzeug (1) nach einem der vorstehenden Ansprüche, wobei die Poliersonde (3) ferner einen Adapter (22) umfasst, um das Polieren von Steckerhülsen/Kontakten/Stiften zu erleichtern.

15. Polierwerkzeug (1) nach Anspruch 13, wobei der Adapter (22) ein Zylinder ist, der am distalen Ende der Poliersonde (3) befestigt ist.

16. Verfahren zur Verwendung eines Polierwerkzeugs (1) nach einem der vorstehenden Ansprüche, umfassend die folgenden Schritte:
Auswählen eines Werkzeugs (1) mit einem geeigneten Grad an Polierpapier (10) und einer Kombination aus Sondenkopf (8) und Polierpapier (10) Verformbarkeit;
Auswahl des erforderlichen Drucks des Sondenkopfes (8) auf die Endfläche des Steckverbinders;
Positionierung des Sondenkopfes (8) über der Endfläche des Steckverbinders;
Betätigen des Bewegungsmittels (14), um das Polierpapier (10) über den Sondenkopf (8) zu bewegen, um die Endfläche zu polieren;
Bewegen des Gebrauchtpapiers (12) zum Gebrauchspapierspeicher (11) und Auffangen von Schmutz und Ablagerungen von dem Gebrauchtpapier.

## Revendications

1. Outil de polissage (1) pour polir des connecteurs de fibre optique, dans lequel l'outil de polissage (1) comprend :
une partie de poignée (2) ; et
une sonde de polissage (3),
dans lequel la partie de poignée (2) comprend :
un moyen de montage (4) pour fixer la sonde de polissage (3) à la partie de poignée (2) ;
une bobine (9) pour contenir une alimentation en papier de polissage (10) ;
une alimentation en papier de polissage (10) comprenant un matériau de support ayant une surface lisse sur une face et un matériau abrasif sur l'autre face ;
une réserve (11) pour contenir du papier de polissage usagé (12) ;
et dans lequel la sonde de polissage (3) comprend :
une partie de montage (7) pour fixer une extrémité proximale (6) de la sonde de polissage (3) au moyen de montage (4) ;
une tête de sonde (8) montée au niveau d'une extrémité distale (5) de la sonde de polissage (3), dans lequel la tête de sonde (8) a un profil prédéterminé ;
un moyen de guidage (13) pour guider le papier de polissage (10) depuis la bobine d'alimentation (9), sur la tête de sonde (8) et vers la réserve de papier usagé (11), la surface lisse du matériau de support de papier de polissage passant sur la tête de sonde (8) ; et
un moyen de sollicitation élastique (18) pour commander la pression de la tête de sonde (8) sur une face d'extrémité de connecteur de fibre optique en cours d'utilisation, dans lequel le moyen de sollicitation (18) est sélectionné pour fournir un niveau prédéterminé de pression sur la face d'extrémité de connecteur de fibre optique ;
dans lequel la tête de sonde (8) et/ou le matériau de support de papier de polissage sont formés à partir d'un matériau déformable et dans lequel la combinaison de la tête de sonde (8) et du papier de polissage (10) fournit une surface déformable pour fournir la pression commandée contre la face d'extrémité de connecteur en cours d'utilisation ;
et dans lequel l'outil (1) comprend en outre un moyen (14) pour déplacer le papier de polissage (10) sur la tête de sonde (8), le moyen (14) pour déplacer le papier commandant en outre la vitesse à laquelle le papier de polissage (10) est déplacé sur la tête de sonde (8).

2. Outil de polissage (1) selon la revendication 1, dans lequel le papier de polissage (10) comprend un degré d'abrasivité sélectionné.

3. Outil de polissage (1) selon la revendication 2, dans lequel le papier de polissage (10) comprend une pluralité de différents degrés d'abrasivité sur une bobine unique de papier de polissage (10).

4. Outil de polissage (1) selon l'une quelconque des revendications précédentes, dans lequel le moyen (14) pour déplacer le papier de polissage sur la tête de sonde (8) comprend un moyen pour déplacer le papier (10) de la bobine d'alimentation (9), sur la tête de sonde (8) et vers la réserve de papier usagé (11).

5. Outil de polissage (1) selon la revendication 3, dans lequel le moyen de déplacement (14) comprend un mécanisme de remontage ou « d'horlogerie » comprenant un ressort (16) et une poignée de remontage (15) ou dans lequel le moyen de déplacement comprend une batterie ou une alimentation secteur.

6. Outil de polissage (1) selon l'une quelconque des revendications précédentes, dans lequel la tête de sonde (8) est conformée pour permettre au papier (10) de passer doucement dessus tout en effectuant l'action de polissage sur une face d'extrémité de connecteur.

7. Outil de polissage (1) selon l'une quelconque des revendications précédentes, dans lequel la tête de sonde (8) est formée d'un matériau qui est plus mou que le corps principal de la sonde (3).

8. Outil de polissage (1) selon l'une quelconque des revendications 1 à 6, dans lequel la tête de sonde (8) est formée d'un matériau relativement dur et un matériau de support du papier de polissage (10) est constitué d'un matériau relativement mou.

9. Outil de polissage (1) selon l'une quelconque des revendications précédentes, dans lequel le diamètre de la tête de sonde (8) est sélectionné pour être utilisé dans différents types de connecteur.

10. Outil de polissage (1) selon l'une quelconque des revendications précédentes, dans lequel le moyen de sollicitation élastique (18) comprend un ressort.

11. Outil de polissage (1) selon l'une quelconque des revendications précédentes, dans lequel la pression du moyen de sollicitation élastique (18) est réglable.

12. Outil de polissage (1) selon l'une quelconque des revendications précédentes, dans lequel la sonde de polissage (3) est pourvue d'un moyen (21) pour incliner la partie distale (5) de la sonde (3) et la tête de sonde (8) par rapport à la partie de poignée (2).

13. Outil de polissage (1) selon l'une quelconque des revendications précédentes, dans lequel la sonde de polissage (3) comporte en outre un moyen pour faire tourner la tête de sonde (8) d'un côté à l'autre.

14. Outil de polissage (1) selon l'une quelconque des revendications précédentes, dans lequel la sonde de polissage (3) comprend en outre un adaptateur (22) pour faciliter le polissage de ferrules/contacts/broches de type mâle.

15. Outil de polissage (1) selon la revendication 13, dans lequel l'adaptateur (22) est un cylindre fixé à l'extrémité distale de la sonde de polissage (3).

16. Procédé d'utilisation d'un outil de polissage (1) selon l'une quelconque des revendications précédentes, comprenant les étapes suivantes :
sélection d'un outil (1) avec une qualité appropriée de papier de polissage (10) et une combinaison de déformabilité de tête de sonde (8) et de papier de polissage (10) ;
sélection de la pression requise de la tête de sonde (8) sur la face d'extrémité du connecteur ;
positionnement de la tête de sonde (8) sur la face d'extrémité du connecteur ;
fonctionnement du moyen de déplacement (14) pour déplacer le papier de polissage (10) sur la tête de sonde (8) afin de polir la face d'extrémité ;
déplacement du papier usagé (12) vers la réserve de papier usagé (11) et collecte de la saleté et des débris du papier usagé.
